# EUROPEAN PATENT APPLICATION

(11) **EP 4 804 082 A1**
(43) Date of publication of application: **09.09.2026**
(21) Application number: 26162925.7
(22) Date of filing: 06.03.2026
(51) Int. Cl.: G06N 3/0455, G06N 3/0895, G06N 3/0475

(54) **ATTENTION-BASED NEURAL NETWORK SYSTEMS FOR SEQUENCE MODELING**

(30) Priority: 07.03.2025 US 202519073616
(71) Applicant: Fair Isaac Corporation, Minneapolis, MN 55402 (US)
(72) Inventor: ZOLDI, Scott Michael, MINNEAPOLIS, 55402 (US); KENNEL, Matthew Bochner, MINNEAPOLIS, 55402 (US); MURRAY, Joseph Francis, MINNEAPOLIS, 55402 (US); FRANCIS, Jayson Samir, MINNEAPOLIS, 55402 (US)
(74) Representative: Müller-Boré & Partner Patentanwälte PartG mbB

(57) **Abstract**

A system for generating an output by a neural network comprising: a transformation module configured to transform input dataset into embedded representations; an encoding module configured to add temporal position encodings into the embedded representations, wherein the temporal position encodings encode time-dependent information of the input dataset to preserve sequential relationships among data points; and a sequence modeling network configured to process the temporally encoded embedded representations to extract predictive features and to generate one or more outputs, wherein the sequence modeling network comprises an attention mechanism that assigns varying importance to one or more data entries during learning, and wherein the sequence modeling network is trained with a multi-objective loss function that jointly optimizes a supervised learning component and an unsupervised learning component, wherein the unsupervised learning component is configured to learn from an unlabeled dataset without relying on labeled training data.

## Description

### CROSS-REFERENCE TO RELATED APPLICATION

This application claims priority to U.S. Application No. 19/073,616, entitled "ATTENTION-BASED NEURAL NETWORK SYSTEMS FOR SEQUENCE MODELING" filed on March 7, 2025, and the contents of which are hereby incorporated by reference.

### TECHNICAL FIELD

The subject matter described herein relates to attention-based neural network systems, specifically systems and methods for sequence modeling of time-ordered data.

### BACKGROUND

Machine learning is widely used to analyze and model complex data patterns across various domains, including healthcare, finance, cybersecurity, autonomous systems, industrial automation, and Internet of Things (IoT) networks. Many modern applications involve processing sequential and time-dependent data, where individual data points occur at irregular intervals and exhibit high variability in both structure and frequency. Examples include patient health records, sensor logs, financial transactions, IoT telemetry from interconnected industrial systems, and behavioral data streams, all of which require sophisticated modeling techniques to extract meaningful insights.

A key challenge in modeling such data is the need to capture temporal dependencies while maintaining computational efficiency. Many real-world data sources, such as IoT telemetry, patient monitoring systems, and financial event logs, generate data points at irregular intervals, meaning that observations are not evenly spaced over time. The relationship between past and future data points is often non-trivial, as the impact of previous events may decay over time or exhibit delayed effects. For example, in an IoT-enabled warehouse management system, thousands of distributed sensors generate event-driven data streams to track machine status, environmental conditions, and inventory movements. These events occur asynchronously, requiring a modeling approach that can effectively handle variable time gaps between observations.

A second challenge is the heterogeneous nature of real-world sequential data. Unlike structured tabular datasets, time-ordered data often consists of multiple data types, including numerical measurements, categorical identifiers, and unstructured text. For example, a patient's electronic health record (EHR) contains numerical lab values, categorical diagnosis codes, and free-text physician notes, all of which need to be effectively transformed into a format suitable for machine learning models. Similarly, industrial IoT data may include sensor readings, device identifiers, and system alerts, requiring a unified representation that enables meaningful comparisons and predictions across different feature types.

Therefore, there is a need for a modeling approach that can effectively process sequential, time-dependent data with varying structures while maintaining flexibility across different domains.

### SUMMARY

Methods, systems, and articles of manufacture, including computer program products, are provided for implement a neural network for generating an output. In one aspect, there is provided a system comprising one or more computers and one or more storage devices storing instructions that when executed by the one or more computers cause the one or more computers to implement a neural network for generating an output, the neural network comprising: a transformation module configured to transform input dataset into embedded representations, wherein the input dataset comprises a plurality of data entries, and each of the data entries comprises a plurality of data points; an encoding module configured to add temporal position encodings into the embedded representations, wherein the temporal position encodings encode time-dependent information of the input dataset to preserve sequential relationships among data points; and a sequence modeling network configured to process the temporally encoded embedded representations to extract predictive features and to generate one or more outputs, wherein the sequence modeling network comprises an attention mechanism that assigns varying importance to one or more data entries during learning, and wherein the sequence modeling network is trained with a multi-objective loss function that jointly optimizes a supervised learning component and an unsupervised learning component, wherein the unsupervised learning component is configured to learn from an unlabeled dataset without relying on labeled training data.

In some variations, the unsupervised learning component is trained using a contrastive loss function, wherein the contrastive loss function optimizes the sequence modeling network by maximizing a separation between representations of data entries belonging to the same profiling entity and data entries containing substituted, synthetically generated, or inserted data points from different profiling entities.

In some variations, the supervised learning component is trained using labeled data to optimize a classification objective, wherein the supervised learning component is configured to generate a predictive output using the extracted predictive features, and wherein the classification objective is optimized using a loss function that minimizes a deviation between a predicted output and ground-truth labels associated with the data entries.

In some variations, the sequence modeling network extracts the predictive features by an attention mechanism that dynamically weighs data entries based on learned importance represented by an attention score associated with each of the data entries.

In some variations, the embedded representation is a structured representation of the input dataset, generated as either a tokenized representation or a vectorized representation.

In some variations, the temporal position encodings comprise at least one of delta time representations, periodic encodings, or learned time embeddings, wherein the delta time representations capture time intervals between data entries, the periodic encodings represent cyclic temporal patterns, and the learned time embeddings adaptively encode temporal dependencies.

In some variations, the temporal position encodings are incorporated into the embedded representations such that the sequence modeling network processes the temporally encoded embedded representations to extract predictive features while maintaining sequential dependencies among the data entries.

In another aspect, there is provided a computer-implemented method for generating an output using a neural network, the method comprising: transforming an input dataset into embedded representations using a transformation module, wherein the input dataset comprises a plurality of data entries, and each of the data entries comprises a plurality of data points; adding temporal position encodings to the embedded representations using an encoding module, wherein the temporal position encodings encode time-dependent information of the input dataset to preserve sequential relationships among data points; processing the temporally encoded embedded representations using a sequence modeling network to extract predictive features and generate one or more outputs, wherein the sequence modeling network comprises an attention mechanism that assigns varying importance to one or more data entries during learning; and training the sequence modeling network with a multi-objective loss function that jointly optimizes: i) a supervised learning component; ii) an unsupervised learning component, wherein the unsupervised learning component is configured to learn from an unlabeled dataset without relying on labeled training data.

In some variations, the unsupervised learning component is trained using a contrastive loss function, wherein the contrastive loss function optimizes the sequence modeling network by maximizing a separation between representations of data entries belonging to the same profiling entity and data entries containing substituted, synthetically generated, or inserted data points from different profiling entities.

In some variations, the supervised learning component is trained using labeled data to optimize a classification objective, wherein the supervised learning component is configured to generate a predictive output using the extracted predictive features, and wherein the classification objective is optimized using a loss function that minimizes a deviation between a predicted output and ground-truth labels associated with the data entries.

In some variations, the sequence modeling network extracts the predictive features by an attention mechanism that dynamically weighs data entries based on learned importance represented by an attention score associated with each of the data entries.

In some variations, the embedded representation is a structured representation of the input dataset, generated as either a tokenized representation or a vectorized representation.

In some variations, the temporal position encodings comprise at least one of delta time representations, periodic encodings, or learned time embeddings, wherein the delta time representations capture time intervals between data entries, the periodic encodings represent cyclic temporal patterns, and the learned time embeddings adaptively encode temporal dependencies.

In some variations, the temporal position encodings are incorporated into the embedded representations such that the sequence modeling network processes the temporally encoded embedded representations to extract predictive features while maintaining sequential dependencies among the data entries.

In another aspect, there is provided a computer program product including a non-transitory computer readable medium storing instructions that, when executed by at least one programmable processor, cause the at least one programmable processor to implement a neural network for generating an output, the neural network comprising: a transformation module configured to transform input dataset into embedded representations, wherein the input dataset comprises a plurality of data entries, and each of the data entries comprises a plurality of data points; an encoding module configured to add temporal position encodings into the embedded representations, wherein the temporal position encodings encode time-dependent information of the input dataset to preserve sequential relationships among data points; and a sequence modeling network configured to process the temporally encoded embedded representations to extract predictive features and to generate one or more outputs, wherein the sequence modeling network comprises an attention mechanism that assigns varying importance to one or more data entries during learning, and wherein the sequence modeling network is trained with a multi-objective loss function that jointly optimizes a supervised learning component and an unsupervised learning component, wherein the unsupervised learning component is configured to learn from an unlabeled dataset without relying on labeled training data.

In some variations, the unsupervised learning component is trained using a contrastive loss function, wherein the contrastive loss function optimizes the sequence modeling network by maximizing a separation between representations of data entries belonging to the same profiling entity and data entries containing substituted, synthetically generated, or inserted data points from different profiling entities.

In some variations, the supervised learning component is trained using labeled data to optimize a classification objective, wherein the supervised learning component is configured to generate a predictive output using the extracted predictive features, and wherein the classification objective is optimized using a loss function that minimizes a deviation between a predicted output and ground-truth labels associated with the data entries.

In some variations, the sequence modeling network extracts the predictive features by an attention mechanism that dynamically weighs data entries based on learned importance represented by an attention score associated with each of the data entries.

In some variations, the embedded representation is a structured representation of the input dataset, generated as either a tokenized representation or a vectorized representation.

In some variations, the temporal position encodings comprise at least one of delta time representations, periodic encodings, or learned time embeddings, wherein the delta time representations capture time intervals between data entries, the periodic encodings represent cyclic temporal patterns, and the learned time embeddings adaptively encode temporal dependencies.

In some variations, the temporal position encodings are incorporated into the embedded representations such that the sequence modeling network processes the temporally encoded embedded representations to extract predictive features while maintaining sequential dependencies among the data entries.

Implementations of the current subject matter can include, but are not limited to, methods consistent with the descriptions provided herein as well as articles that include a tangibly embodied machine-readable medium operable to cause one or more machines (e.g., computers, etc.) to result in operations implementing one or more of the described features. Similarly, computer systems are also described that may include one or more processors and one or more memories coupled to the one or more processors. A memory, which can include a computer-readable storage medium, may include, encode, store, or the like one or more programs that cause one or more processors to perform one or more of the operations described herein. Computer implemented methods consistent with one or more implementations of the current subject matter can be implemented by one or more data processors residing in a single computing system or multiple computing systems. Such multiple computing systems can be connected and can exchange data and/or commands or other instructions or the like via one or more connections, including but not limited to a connection over a network (e.g. the Internet, a wireless wide area network, a local area network, a wide area network, a wired network, or the like), via a direct connection between one or more of the multiple computing systems, etc.

The details of one or more variations of the subject matter described herein are set forth in the accompanying drawings and the description below. Other features and advantages of the subject matter described herein will be apparent from the description and drawings, and from the claims. The claims that follow this disclosure are intended to define the scope of the protected subject matter.

### DESCRIPTION OF DRAWINGS

The accompanying drawings, which are incorporated in and constitute a part of this specification, show certain aspects of the subject matter disclosed herein and, together with the description, help explain some of the principles associated with the disclosed implementations. In the drawings,
FIG. 1 is a diagram illustrating an exemplary architecture of an attention-based neural network system for sequence modeling, in accordance with one or more embodiments of the subject matter described herein.
FIG. 2A illustrates an exemplary process for tokenizing a data entry into multiple tokenized representations, in accordance with one or more embodiments of the subject matter described herein.
FIG. 2B illustrates an exemplary process for tokenizing multiple data entries and structuring them for sequential modeling, in accordance with one or more embodiments of the subject matter described herein.
FIG. 2C illustrates an exemplary frame autoregressive decoding process used for modeling sequential data entries, in accordance with one or more embodiments of the subject matter described herein.
FIG. 3 is a diagram illustrating an exemplary process for transforming categorical and numerical data points within a data entry into structured embedding subspaces before dimension-wise concatenation into a vector representation, in accordance with one or more embodiments of the subject matter described herein.
FIG. 4 is a diagram illustrating an exemplary process for encoding time-dependent attributes within a data entry using structured transformation techniques, including embedding-based representations and sinusoidal encoding functions, in accordance with one or more embodiments of the subject matter described herein.
FIG. 5 is a diagram illustrating an exemplary architecture of a sequence modeling network for processing temporally encoded data entries, in accordance with one or more embodiments of the subject matter described herein.
FIG. 6 is a diagram illustrating the comparison between the proposed sequence modeling network and a baseline Latent Dirichlet Allocation (LDA) model in an unsupervised next-step prediction task, in accordance with one or more embodiments of the subject matter described herein.
FIG. 7 is a diagram illustrating the performance comparison of sequence models of varying sizes in an unsupervised next-step prediction task, in accordance with one or more embodiments of the subject matter described herein.
FIG. 8 is a diagram illustrating the supervised performance of the vectorized sequence model in a classification task, in accordance with one or more embodiments of the subject matter described herein.
FIG. 9 is a diagram illustrating an exemplary architecture for parallelized sequence processing using attention-based mechanisms, in accordance with one or more embodiments of the subject matter described herein.
FIG. 10 depicts a block diagram illustrating a computing system consistent with implementations of the current subject matter.
FIG. 11 is a diagram illustrating a flowchart of a process for generating an output using a neural network, in accordance with one or more embodiments of the subject matter described herein.

When practical, like labels are used to refer to same or similar items in the drawings.

### DETAILED DESCRIPTION

The details of one or more variations of the subject matter described herein are set forth in the accompanying drawings.

As discussed above, there is a need for a solution that can effectively process sequential, time-dependent data with varying structures while maintaining flexibility across different domains.

In many real-world applications, data is often available in large quantities, but only a fraction of it is labeled. For example, in various domains such as financial risk analysis, healthcare diagnostics, and industrial system monitoring, vast amounts of sequential data are generated continuously, yet only certain events are explicitly categorized with labels. This imbalance poses a challenge in training machine learning models, as labeled data is typically necessary for supervised learning, while unlabeled data remains underutilized despite containing valuable patterns. Furthermore, sequential data often consists of multiple data types, including numerical values, categorical attributes, and unstructured text, making it difficult to transform and integrate effectively into machine learning models. Existing AI architectures face multiple limitations when dealing with such data. Traditional supervised learning models rely exclusively on labeled data, limiting their ability to generalize in cases where labeled examples are scarce. In scenarios where labeling is expensive or impractical, this dependence on annotated data results in inefficient learning and reduced adaptability. Furthermore, sequential data observations in various applications occur at irregular time intervals, introducing complexities in modeling temporal relationships. Many conventional models assume fixed time steps or structured data formats, making them ill-suited for applications where data points are event-driven or collected asynchronously.

Another challenge is the difficulty in capturing long-range dependencies in sequential data. Recurrent-based models, such as traditional time-series forecasting techniques and recurrent neural networks (RNNs), often struggle with sequences of varying lengths and may suffer from issues such as vanishing gradients, limiting their ability to learn from distant past events. Additionally, feature engineering is frequently required to extract meaningful information from raw sequential data, but this process is often domain-specific, labor-intensive, and non-scalable across different applications. Moreover, AI systems trained solely on supervised objectives do not efficiently leverage the vast amounts of available unlabeled data, leading to suboptimal performance in cases where labeled examples are insufficient. While some models attempt to use self-supervised or unsupervised learning techniques to enhance representation learning, these approaches often lack mechanisms for effectively integrating labeled and unlabeled data in a structured manner. Furthermore, in heterogeneous data environments, where different data types coexist within a single sequence, existing architectures face difficulties in unifying these representations while preserving both structural and temporal dependencies.

The approach described herein addresses these challenges through a system designed to process time-ordered data while effectively integrating both labeled and unlabeled information. The accompanying figures illustrate various aspects of the system architecture, including data transformation, sequence modeling, and the mechanisms for capturing temporal dependencies.

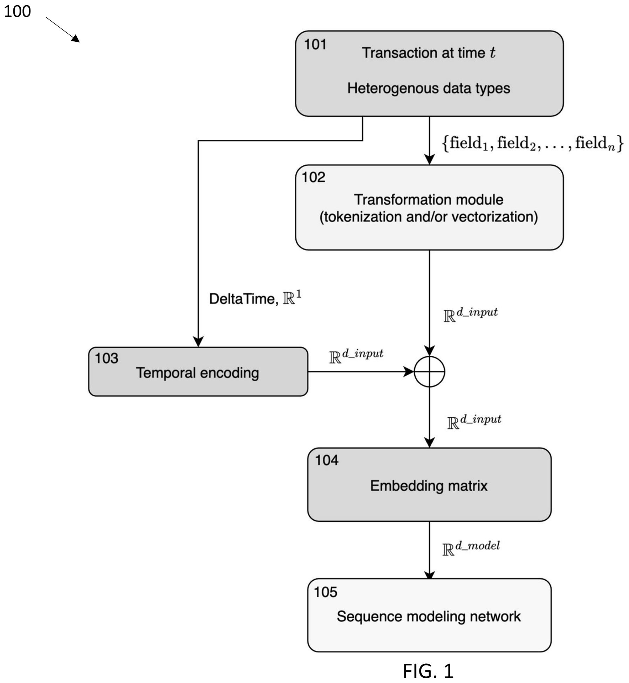

**FIG. 1** is a diagram illustrating an exemplary architecture of an attention-based neural network system 100 for sequence modeling, in accordance with one or more embodiments of the subject matter described herein. The system 100 is configured to process heterogeneous, time-dependent data by transforming raw input data into structured representations suitable for downstream modeling. The architecture integrates data transformation, temporal encoding, embedding, and sequence modeling to enable learning from sequential data while preserving both structural and temporal dependencies.

The system 100 includes a data input module 101 that receives sequential data points occurring at different timestamps. In some embodiments, each data point consists of heterogeneous data fields that may include numerical values, categorical attributes, and unstructured text. These fields are extracted as a structured set {field1,field2,...,fieldn} and forwarded for further processing. The transformation module 102 is configured to convert raw input fields into a structured numerical representation. Depending on the modeling approach and data types, the transformation may serialize individual fields of the observation (which can be a data entry or a data point, depending on data organization granularity) into a particular ordered sequence with a (discrete) time-wise concatenation, or the transformation may represent the various fields into a single vector, for instance by dimension-wise concatenation of individually transformed fields or a mathematical aggregation such as adding embeddings of the various fields. The fields themselves have their own trainable transformations. Textual and categorical fields are typically represented by trainable embedding vectors, one for each possible discrete input. Numerical scalar observations can either be converted into quantized discrete tokens by some scheme and represented as if categorical, or, directly transformed into vectors while remaining in a numerical space, such as multiplication by a continuous, learnable basis vector, perhaps after a numerical normalization such as z-scaling. The transformation module outputs a structured representation which serves as the basis for further computations.

The system 100 further includes a temporal encoding module 103 that may capture temporal dependencies. In some embodiments, the temporal encoding module 103 may process DeltaTime, representing the time difference between consecutive data points, and converts this information into an encoded representation. The temporal encoding module 103 may produce a temporally enriched representation, which is then integrated with the transformed data to incorporate time-dependent relationships.

The processed data is then passed to an embedding matrix module 104, which may map the input representations into a learned feature space. The embedding process enables the model to capture relationships between different features and facilitate effective learning from sequential patterns.

As shown in FIG. 1, the system 100 further comprises sequence modeling network 105, which may extract predictive features from the temporally encoded sequences received embedding matrix module 104. In some embodiments, the sequence modeling network 105 may receive the temporally encoded sequences directly from the temporal encoding module 103. In some embodiments, the sequence modeling network 105 comprises an attention mechanism that dynamically assigns varying importance to different historical data points, enabling the system to focus on relevant patterns when generating predictions. Further details of the sequence modeling network 105 is described herein elsewhere.

### Frame Serialization

As discussed in connection with FIG. 1, the transformation module 102 may be configured to perform serialization to convert the raw data entries into structured numerical representations suitable for downstream processing. The various fields in an observation are transformed into subsequence of individual observations in a "frame" and the successive observations occurring in physical time have their frames sequentially concatenated. Each field also needs a representation. In a tokenization process, certain fields of each data entry are mapped into discrete tokens that can be processed by the neural network. Categorical fields are naturally represented by discrete tokens but numerical fields may also be transformed and quantized into tokens. With a choice of the modeler, some natively numerical fields may be retained in a numerical space and similarly serialized into the frame.

In some embodiments, serialization and frame generation is performed by mapping each data point within a data entry into one or more tokens or numerical representations. Depending on the data type, different tokenization strategies may be applied. For categorical data points, each unique value may be assigned a distinct token, ensuring that categorical distinctions are maintained within the tokenized representation. For numerical data points, various discretization techniques may be employed, including logarithmic binning, equal-frequency binning, or equal-interval binning, to transform continuous values into discrete tokens. In some cases, a single numerical value may be mapped to multiple tokens to capture different levels of precision, for example, using binary encoding, Gray coding, or multi-level quantization schemes. Alternatively, a numerical value may be directly transformed into a vector, such as by multiplication by a learnable basis vector.

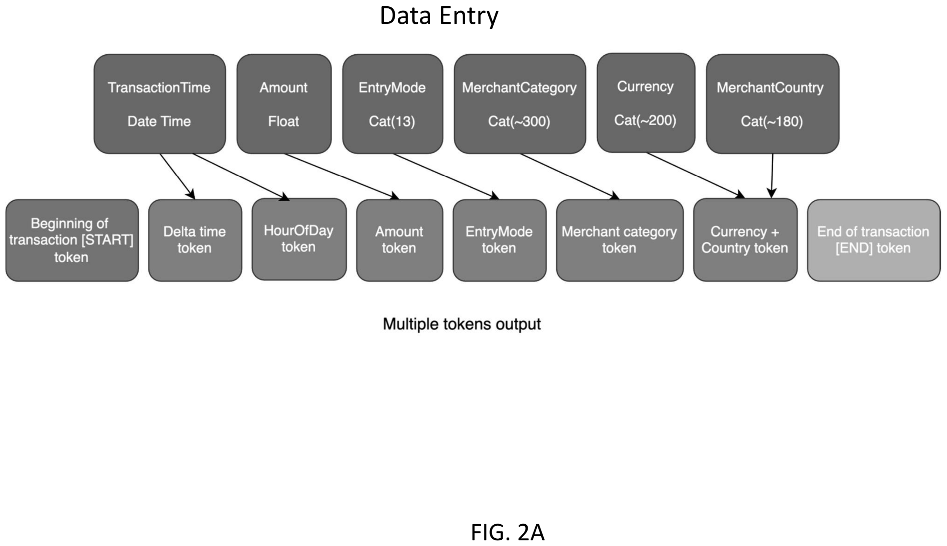

FIG. 2A illustrates an exemplary process for transforming a data entry into a frame of multiple tokens, in accordance with one or more embodiments of the subject matter described herein. The figure demonstrates how various data points within a data entry are transformed into a structured sequence of tokens, performing a representation of each field and a serialization of multiple fields into a frame, which can be processed by the sequence modeling network. In some embodiments, a data entry comprises multiple data points, each corresponding to different feature types, such as date-time values, numerical values, and categorical attributes. The transformation module 102, as described in FIG. 1, processes these data points by mapping them into tokenized or numerical representations. At the beginning of the tokenization process, a "Beginning of transaction [START] token" is introduced to mark the start of a new data entry. The figure shows an example where all fields have been chosen to be tokenized. Each data point is then converted into one or more tokens, depending on its type:
- Temporal data points (e.g., "TransactionTime") are converted into Delta time tokens and HourOfDay tokens to preserve time-dependent relationships.
- Numerical data points (e.g., "Amount") are transformed into Amount tokens, which may be discretized using binning techniques or other encoding strategies.
- Categorical data points (e.g., "EntryMode", "MerchantCategory", "Currency", and "MerchantCountry") are assigned distinct tokens, ensuring that categorical distinctions are preserved.
- In some cases, multiple data points are combined into a single token to reduce redundancy. For example, the Currency and Country fields are merged into a single token, as they are highly correlated and provide minimal additional information when considered separately.

At the end of the tokenization process, an "End of transaction [END] token" is appended to signal the completion of the data entry representation. The resulting sequence of tokens is then passed to the embedding module 104 as described in FIG. 1 and subsequently processed by the sequence modeling network 105.

By converting heterogeneous data points into a structured frame format, the approach described herein enables efficient representation learning for sequential data while maintaining temporal dependencies and categorical relationships.

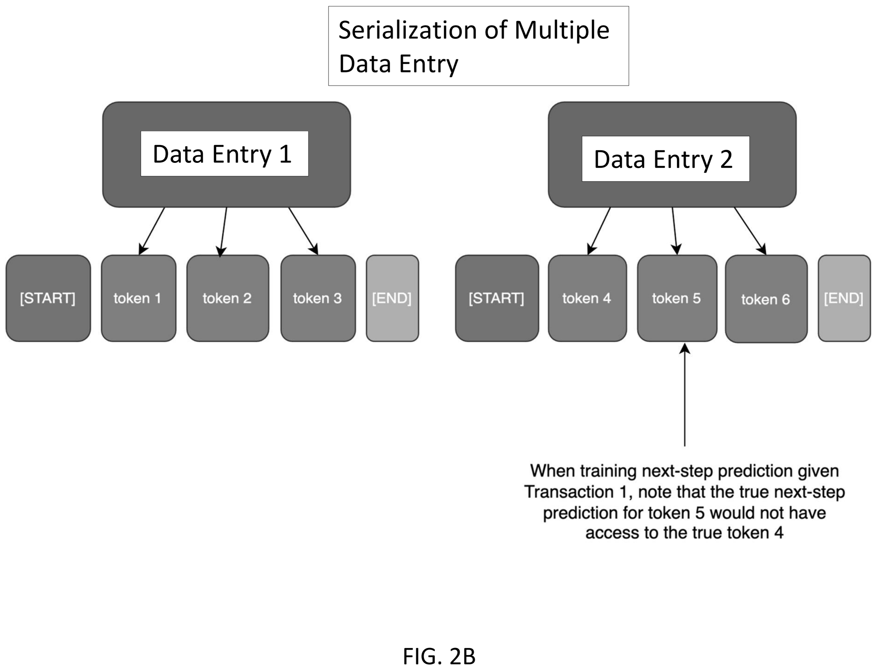

FIG. 2B illustrates an exemplary process for representing in frames multiple data entries and structuring them for sequential modeling, in accordance with one or more embodiments of the subject matter described herein. The figure demonstrates how each data entry is converted into a sequence of tokens, with explicit start and end tokens to delineate individual data entries. In some embodiments, when training a next-step prediction model, only tokens from prior data entries are available for generating predictions. For example, when training the model to predict the token sequence for Data Entry 2, the model can only utilize information from the tokens of Data Entry 1. This restriction ensures that future data points remain unobserved during training, preserving the causality of the sequential learning process, enabling fair causal inference for production use of a trained model in a real-time operational context. As illustrated, token 5 is predicted using information derived solely from tokens 1-3, without direct access to token 4. This structure maintains the sequential integrity of the data and enables learning from historical patterns without data leakage. By structuring data entries as tokenized sequences and enforcing causal dependencies during training, the approach described herein enables efficient representation learning for sequential modeling while preserving the temporal structure of the data.

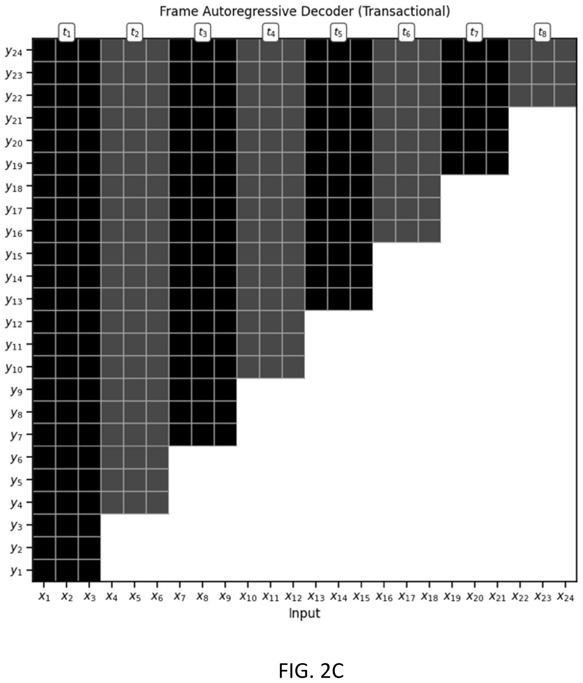

FIG. 2C illustrates an exemplary frame autoregressive decoding process used for modeling sequential data entries, in accordance with one or more embodiments of the subject matter described herein. The figure represents a causal attention mask, ensuring that each token prediction is conditioned only on past observations without direct access to future observations. In some embodiments, an input sequence {x1,x2,...,xn} is processed in an autoregressive manner, where each output **yₖ** is generated based on previously observed data. The masked structure ensures that the model does not have visibility into future data points at inference time, preventing data leakage and maintaining the integrity of sequence-based learning.

As shown in the figure, darker shaded areas correspond to data available for prediction at each time step, while lighter areas represent masked positions that remain inaccessible during training. This mechanism enforces the principle that each prediction depends solely on prior data, thereby preserving the temporal ordering and causal relationships inherent in sequential data. By implementing frame autoregressive decoding, the approach described herein facilitates the generation of structured predictions while maintaining alignment with natural data dependencies. This enables the model to learn meaningful representations from sequential data while ensuring consistency across different applications.

### Vectorization

In some embodiments, an alternative transformation method to frame serialization is vectorization, in which all data points within a data entry are collected into a single vector representation of fixed dimensionality. This vectorized representation is suitable for input to the embedding matrix (as illustrated in FIG. 1, element 104) and enables efficient processing of structured data. Compared with the frame serialization approach, vectorization has the advantage of reduced computational complexity, as only a single vector is processed per data entry rather than multiple serialized representations. Additionally, vectorization ensures that all data points within a data entry are considered as a unified observation, preserving the natural structure of the event without imposing an arbitrary ordering of attributes. However, the serialization approach may provide the model with a greater ability to independently attend to distinct fields and features within the data entry.

A naive approach to vectorization involves concatenating all data points in their raw form into a high-dimensional vector, often exceeding several hundred dimensions. For categorical data points, a one-hot encoding scheme may be used, where each categorical variable with N distinct values is represented as an N-dimensional binary vector. However, this approach introduces a significant challenge when integrating continuous numerical values, such as transaction amounts, as these values are not directly comparable to categorical embeddings in a standard vector space.

A key issue in heterogeneous vectorization is the imbalance between high-cardinality categorical attributes and low-cardinality categorical or numerical attributes. For instance, in a log-likelihood-based prediction model, a high-cardinality categorical attribute (e.g., MerchantCategory) will exhibit a higher entropy distribution compared to a low-cardinality categorical attribute (e.g., EntryMode). As a result, the variance in the loss function is much larger for high-entropy attributes, causing the model to place disproportionate emphasis on predicting high-cardinality elements, while lower-cardinality attributes may be underweighted in the learning gradients.

An additional challenge arises when combining discrete categorical attributes with continuous numerical attributes in a vector space. While categorical attributes are typically modeled as discrete probability distributions, continuous attributes require density estimation, where the scale of numerical values directly influences the loss function. Without proper normalization, numerical attributes may introduce arbitrary scale dependencies that impact predictive performance. These implicit numerical choices exist in many conventional vectorization schemes, even if they are not explicitly accounted for.

To address these challenges, the approach described herein constructs a single vector representation per data entry. This allows the model to learn structured relationships across heterogeneous feature types, ensuring balanced optimization across categorical, numerical, and temporal attributes.

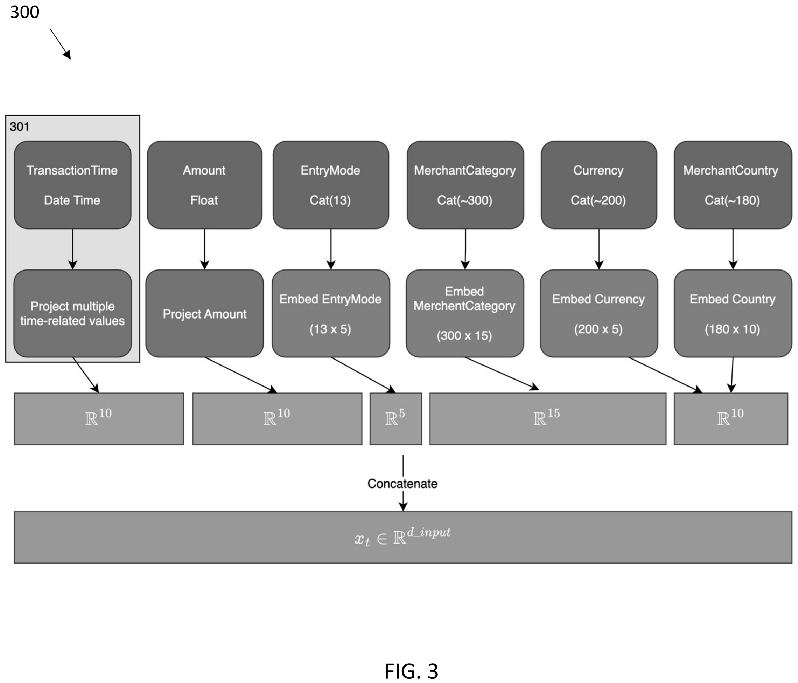

FIG. 3 is a diagram illustrating an exemplary process for transforming categorical and numerical data points within a data entry into structured embedding subspaces before dimension-wise concatenation into a vector representation, in accordance with one or more embodiments of the subject matter described herein. As illustrated in FIG. 3, each data point within a data entry is transformed into an embedding subspace before being concatenated into the final vector representation. In some embodiments, categorical attributes, such as EntryMode, MerchantCategory, Currency, and MerchantCountry, are embedded into lower-dimensional vector spaces through learned embeddings. For example, as shown in FIG. 3, the MerchantCategory attribute, which has a high cardinality of approximately 300 unique values, is mapped into a 15-dimensional embedding space, whereas EntryMode is mapped into a 5-dimensional space. Similarly, Currency and Country attributes may be combined into a joint embedding to reflect their correlation while reducing dimensional redundancy. For numerical attributes, values are projected onto a continuous vector space. Numerical attributes may be mapped onto subspaces within the embedding space to ensure proper scaling and comparability with categorical attributes. In some embodiments, numerical embeddings may be structured such that they preserve magnitude relationships, allowing for meaningful distance metrics in the learned representation. The transformations specific to each attribute will typically have free learnable parameters, such as discrete embeddings or basis vectors, enabling the model training process to balance the contribution of each individual attribute as appropriate to optimize the loss function. In some embodiments, the free learnable parameters are model parameters that are automatically optimized during training rather than being manually fixed, allowing the model to adjust them dynamically to minimize the loss function and improve performance. Alternatively or additionally, each individual attribute may be transformed with learnable parameters into the full *d_input* dimensional space and combined by addition instead of dimension-wise concatenation. This way, the model can integrate attribute information in a shared representation space, allowing interactions between attributes to be learned implicitly while maintaining a consistent feature dimension for downstream processing.

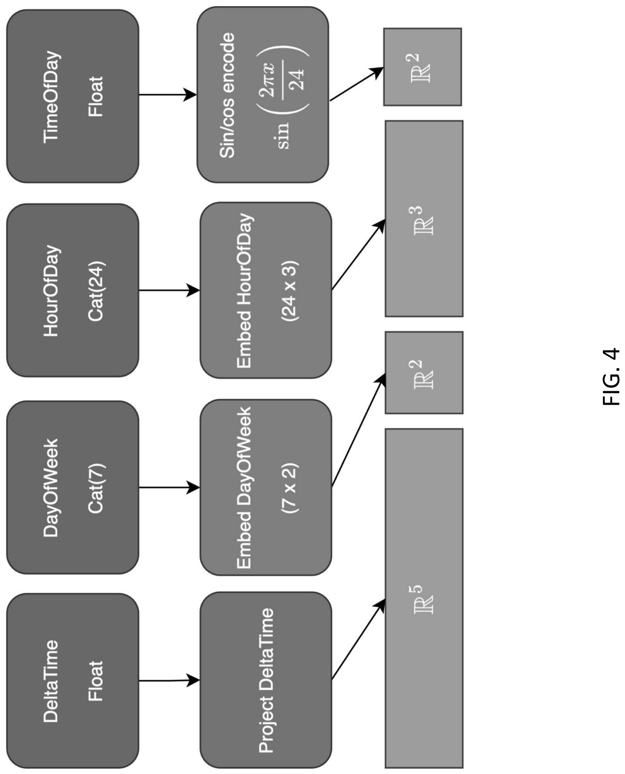

FIG. 4 is a diagram illustrating an exemplary process for encoding time-dependent attributes within a data entry using structured transformation techniques, including embedding-based representations and sinusoidal encoding functions, in accordance with one or more embodiments of the subject matter described herein. As illustrated in FIG. 4, time-dependent attributes within a data entry are encoded using a structured transformation process. The TransactionTime attribute is decomposed into multiple time-related values, each of which is mapped into a structured embedding space. DeltaTime, which represents the elapsed time between consecutive data entries, is projected into a continuous subspace (R⁵) to preserve temporal distance relationships. DayOfWeek and HourOfDay, which represent periodic categorical attributes, are embedded into low-dimensional spaces. For example, DayOfWeek is mapped into a 2-dimensional embedding space, while HourOfDay is mapped into a 3-dimensional space, allowing the model to learn structured temporal dependencies. TimeOfDay is encoded using sinusoidal encoding functions, such as sin/cos encoding, ensuring that temporally adjacent timestamps are represented in a manner that reflects their relative proximity (e.g., Sunday 11:45 PM and Monday 12:05 AM). By incorporating structured embeddings, numerical projections, and temporal encoding, the approach described herein enables efficient representation learning from heterogeneous, time-dependent data while maintaining computational efficiency and balanced feature learning.

### Temporal Encoding

In some embodiments, time and DeltaTime information are incorporated into the modeling process through a temporal encoding module 103 as illustrated in FIG. 1. The temporal encoding module 103 may add additional information about the temporal properties of the sequence of data entries, allowing the model to capture relationships between observations that occur at varying time intervals. The temporal encoding module 103 generates a time-dependent vector that is added to the output of the transformation module 102 in FIG. 1, making temporal dependencies available to the sequence modeling network.

For a sequence of N data entries, where each data entry is represented as an input vector of dimension *d_input,* the model constructs an input matrix of size (*N, d_input*)*.* A temporal position encoding matrix M of the same size is computed and added to the input matrix. The elements of this encoding matrix are defined as: ${M}_{i , j} = \left\{\begin{matrix}sin \left({δt}_{i}⋅{ω}_{j}\right) & ∀ j odd \\ cos \left({δt}_{i}⋅{ω}_{j}\right) & ∀ j even\end{matrix}\right.$
where *δ tᵢ* represents the elapsed time (e.g., in fractional days) between the current data entry and previous data entries, and the frequency *ωⱼ* at each row is computed as: ${ω}_{j} = {Ω}^{\left(\frac{2 j}{d _ input}\right)}$
where Ω is a constant, typically ~10⁻⁴, to generate a range of frequencies from high to low as the index increases. This formulation allows different components of the temporal encoding to capture both high-frequency short-term variations and low-frequency long-term trends, making it possible to represent varying temporal dependencies within the sequence.

The temporal encoding module may be applied to both tokenized and vectorized input sequences. In some embodiments, this encoding is particularly beneficial for tokenized sequences, where multiple tokens are generated from a single data entry. By integrating temporal encodings, the model is able to separate the inherent order of features within each event from the broader time-dependent relationships across data entries. This helps prevent the model from overemphasizing the relative order of features within an event and instead focuses on their co-occurrence and interaction patterns within the broader sequence.

In some embodiments, temporal encoding is combined with autoregressive training, allowing the model to make use of sequential dependencies while preserving permutation invariance during training. This allows the system to remain flexible to variations in feature order within each data entry, improving generalization across different types of structured data. Since attention-based sequence modeling networks do not inherently incorporate positional dependencies, various techniques have been developed to integrate temporal information into the learned representations. In some embodiments, rotational positional encodings are introduced into specific components of the attention mechanism, applying position-dependent rotations to the learned vectors.

In the vectorization approach, these rotational encodings allow the model to capture sequential dependencies while maintaining the flexibility of a continuous vector representation. By incorporating position-aware transformations into the network architecture, the approach described herein makes it possible to model temporal relationships effectively, allowing the system to learn from structured, heterogeneous, and time-dependent data across various applications.

In some embodiments, the temporal position encodings may comprise at least one of delta time representations, periodic encodings, or learned time embeddings. In some embodiments, the delta time representations may capture time intervals between data entries, the periodic encodings may represent cyclic temporal patterns, and the learned time embeddings may adaptively encode temporal dependencies between events.

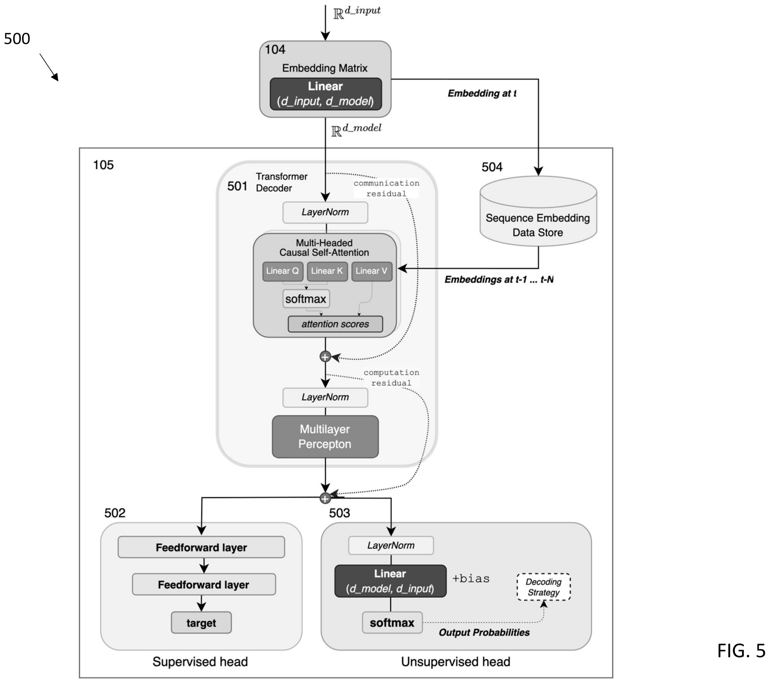

FIG. 5 is a diagram illustrating an exemplary architecture 500 of a sequence modeling network 105 for processing temporally encoded data entries, in accordance with one or more embodiments of the subject matter described herein. The sequence modeling network 105 receives embedded representations of data entries from an embedding matrix 104 and applies an attention-based sequence modeling process to extract predictive features. As shown in FIG. 5, the sequence modeling network 105, which we name it a TwinFlow Transformer, may comprise two different output heads, i.e., the supervise head 502 and the unsupervised head 503.

The embedding matrix 104 processes input data entries by transforming them into an embedded representation suitable for downstream modeling. These embeddings are then provided to a transformer decoder 501, which applies a multi-headed causal self-attention mechanism to model dependencies across sequential data entries. The attention mechanism generates attention scores based on input representations, allowing the model to focus on relevant elements within the sequence. In some embodiments, the attention scores are computed by comparing input embeddings through learned projection matrices, producing query, key, and value representations for each data entry. The attention scores indicate the relative importance of each past data entry when making predictions for the current entry. Specifically, the attention mechanism computes a similarity measure between the query and key representations of data entries, typically using a scaled dot-product operation. The computed attention scores are then normalized using a softmax function, ensuring that the importance values sum to one across all entries. The learned importance represented by these attention scores enables the model to selectively emphasize informative past entries while reducing the influence of less relevant ones. Since the transformer decoder 501 employs a causal self-attention mechanism, the attention computation is constrained such that each data entry can only attend to previous entries within the sequence, preserving the temporal ordering of the data. By dynamically adjusting attention scores based on learned feature representations, the model can capture both short-term and long-range dependencies, allowing for effective sequence modeling in time-dependent datasets.

The transformer decoder 501 includes layer normalization components and a multilayer perceptron that processes the attended representations. The output embeddings generated by the transformer decoder 501 are stored in a sequence embedding data store 504, which maintains historical embeddings from previous data entries. This allows the sequence modeling network 105 to capture patterns and long-range dependencies across time-ordered data. In some embodiments, the sequence embedding data store 504 serves additional roles beyond storing past embeddings. It may be used to retrieve relevant historical context when processing new data entries, allowing the model to incorporate learned representations from prior sequences into ongoing computations. In certain implementations, the sequence embedding data store 504 may facilitate contrastive learning by enabling comparisons between embeddings of data entries associated with the same profiling entity and embeddings from different entities. This supports the unsupervised learning objectives described in FIG. 5, where embeddings are leveraged to optimize predictive representations based on relationships between past and current data entries. In some embodiments, the sequence embedding data store 504 may also be used to smooth sequence continuity by adjusting or interpolating embeddings when dealing with missing or irregularly spaced data entries. This can improve robustness when processing real-world time-dependent datasets where event intervals may be unevenly distributed. By maintaining structured historical embeddings, the sequence embedding data store 504 contributes to the efficiency of both supervised and unsupervised learning processes, supporting adaptive sequence modeling across a range of applications.

The output from the transformer decoder 501 is processed through both a supervised head 502 and an unsupervised head 503. The supervised head 502 consists of a feedforward network that generates target predictions based on labeled data, computing probabilities for a classification loss function. The unsupervised head 503 applies a transformation that maps the learned embeddings back to an output space and computes probabilities for autoregressive loss functions, predicting data elements of subsequent observations. In a contrastive learning scenario, instead of learning to predict future data fields, a minority of the input data points, whether fully or field-wise, are stochastically perturbed. The unsupervised head generates probabilities for a binary classifier, the label being whether or not the actual observed data was retained or whether it was perturbed. In some embodiments, the training data for the supervised head 502 may contain ground-truth labels associated with the data entries. In some embodiments, the supervised head 502 or supervise learning component 502 is trained using labeled data to optimize a classification objective. For example, the supervised learning component 502 may be configured to generate a predictive output using the extracted predictive features that are extracted by another components, for example the unsupervised head 503. In some embodiments, the classification objective may be optimized using a loss function that minimizes a deviation between a predicted output and the ground-truth labels associated with the data entries.

As described herein, the sequence modeling neural network 105 is trained to predict the next data entry in the series through an unsupervised learning objective while optionally producing a classification output such as the likelihood of one predictive result or another. As shown in FIG. 5, the sequence modeling neural network 105 includes a supervised head 502, which predicts a class label, and an unsupervised head 503, which may predict the next data entry. The training process maybe multi-objective, where gradients from both the supervised and unsupervised heads are backpropagated through attention blocks. The sequence embedding data store 504 retains embeddings of previous data entries to avoid redundant computations. The multi-headed attention module 501 may be repeated in additional layers for more complex modeling.

During training, weighting of samples is applied to ensure that each data entry contributes equally to the learning process. Without such adjustments, certain data entries may be overrepresented, leading to biased learning outcomes. Since the length of historical sequences varies across different profiling entities, sequences that exceed the attention window are partitioned into overlapping segments, with a defined stride to determine the spacing between extracted sub-sequences. To prevent over- or under-sampling of transactions due to overlapping sequence segments, weighting mechanisms are applied within the loss function. These adjustments ensure that each data entry appears uniquely within the final portion of the attention window, contributing effectively to the optimization process.

In some embodiments, causal masking is applied during training to maintain the correct temporal order of predictions. This prevents future data entries from influencing predictions of earlier entries, as such information would be unavailable during inference or real-time monitoring. Causal masking ensures that at each time step, only past observations are accessible to the model, preserving the autoregressive nature of the sequence modeling task. By enforcing proper weighting and causal masking strategies, the training process remains robust to variations in sequence length while maintaining efficiency in processing large-scale sequential datasets.

The sequence modeling network 105 is trained using an unsupervised learning objective that predicts the next data entry in the sequence. The model, as illustrated in FIG. 5, which operates in a causal and autoregressive manner. The next-step prediction objective applies to both tokenized and vectorized representations, where the model learns to infer the next data entry based on past observations without relying on explicit target labels. This enables the system to learn structured representations from sequences where classification labels may not be available

In the autoregressive loss function approach, a challenge in next-step prediction is balancing the loss contributions of different types of data points within a data entry. Since each data entry contains a mixture of categorical and numerical values, the neural network must learn appropriate predictive probability distributions for each data point. Categorical data points are typically modeled using a multinomial distribution, while numerical data points may be predicted using a probability density estimation approach.

In some embodiments, loss balancing is applied to adjust for scale variations between data points and categorical and numerical representations. Continuous values are often defined on arbitrary numerical scales, which directly affect the magnitude of the loss function. For example, if a continuous variable is predicted using a Gaussian distribution with both a mean and variance output, a change in scale would proportionally impact the loss function, potentially biasing model optimization. Similarly, categorical prediction loss scales with vocabulary size, meaning that predicting a high-cardinality categorical data point has a larger impact on the loss function than predicting a low-cardinality categorical data point. Without appropriate balancing, certain attributes may be overemphasized in the learning process. To mitigate these issues, the training process applies normalization and rescaling techniques to balance contributions from different data types. In some embodiments, the loss function is structured to ensure that all predicted components of a data entry contribute proportionally to model optimization. By controlling the weighting of each data point's prediction loss, the sequence modeling network 105 can generate well-calibrated probability distributions across heterogeneous data entries.

In addition to next-step prediction, the system applies a contrastive cost function as part of its unsupervised learning objective. Instead of directly predicting the next data entry, an alternative training objective is formulated as a binary classification problem, where the model learns to distinguish between actual next data entries and synthesized alternative data entries. These alternative data entries may be randomly sampled from other entities or selected from different data distributions. The contrastive learning objective is implemented in the unsupervised head 503, where the model is trained to assign a probability score indicating whether a given data entry follows naturally from prior data entries within the sequence. The training process includes a random sampler that constructs actual and synthetic next-step data entries, enabling the model to learn robust representations of sequential dependencies. In some embodiments, the data entries may contain substituted, synthetically generated, or inserted data points from different profiling entities, so to aid in the contrastive learning objective. The loss function is optimized to maximize separation between true and synthetic sequences, improving the system's ability to model structured relationships within the data, and improving the representation quality for supervised modeling when the contrastive task is similar to the supervised task, such as anomaly detection. When labeled anomaly data is scarce but unlabeled data is abundant, contrastive learning can generate training samples by creating groups of observed data-one from the same entity (positive) and one from a different entity (negative)-allowing the model to learn distinguishing patterns without relying on explicit anomaly labels.

One advantage of using a contrastive loss function is that it alleviates the component weighting problem associated with direct next-step prediction. Since contrastive learning is framed as a binary classification task rather than a full probabilistic sequence prediction, it avoids issues related to varying numerical scales and categorical cardinalities. In some embodiments, model performance is evaluated using binary classification metrics such as area under the curve (AUC), label-agnostic AUC (LAUC), and precision-recall measures.

The contrastive learning objective offers a different approach to sequence modeling by shifting the task from direct next-step prediction to a discriminative evaluation of whether a given data entry belongs in the sequence. Instead of merely predicting the most likely next data entry, the model learns to distinguish between an actual next data entry and an alternative, randomly sampled one. This makes the training process more robust to data variations, reducing the sensitivity to numerical scaling and categorical imbalances. To illustrate this distinction, consider a scenario where a sequence modeling network is used to assess whether a patient's medical condition is worsening. A traditional probabilistic model might predict future test results or symptoms based on historical data, but it may overfit to frequent patterns and fail to recognize subtle deviations that indicate an imminent deterioration. In contrast, a contrastive learning approach would train the model to recognize whether the patient's current state aligns with a worsening trajectory by comparing it against historical patterns of deterioration seen in other patients. This method is less dependent on exact numerical values and instead learns structural patterns of change, making it adaptable across different patient groups.

In some embodiments, the contrastive objective helps mitigate false positives and ensures that the model is not biased toward common but irrelevant fluctuations in data. For example, in a financial risk assessment system, a purely probabilistic next-step model might assign a high likelihood to a transaction simply because it resembles past transactions. However, a contrastive model would evaluate the transaction in the context of past behaviors, distinguishing between expected behavior and anomalous patterns. This approach allows the model to generalize across different entities without being overly sensitive to the frequency of certain data entries. Another advantage of contrastive learning is its ability to support adaptive decision-making by dynamically adjusting to evolving data patterns. Unlike traditional predictive models that rely on fixed probability distributions, contrastive learning adapts its decision boundary based on comparisons between actual and alternative scenarios. This makes it particularly useful in applications where the data distribution may change over time, such as cybersecurity anomaly detection, patient monitoring, and financial fraud detection. An advantage of a contrastive objective with data generation by sampling is that it preserves subtle cross-correlations between the data elements, which may be harder to model properly in an autoregressive scenario where one element at a time is independently predicted. For instance, in a financial transaction processing scenario, it may frequently be the case that merchant postal codes of card present transactions are clustered distinctly from online transactions. A sampling process from observed true data preserves this authentic cross-correlation of individual fields automatically, with the contrastive objective tasked with distinguish whether the transaction as a whole is consistent with previous ones, a more subtle and valuable objective. Autoregressive prediction of a joint distribution combining multiple fields (e.g. to preserve the cross correlation) may quickly induce an explosion of dimensionality and too many free parameters to learn successfully, whereas the contrastive objective bypasses that problem. Alternatively, as in the frame serialization process, fields may be predicted sequentially, conditioned on others but this is an approximation to the full joint distribution which may not be as successful depending on the ordering. The ability to compare actual sequences with synthetic alternative sequences introduces additional flexibility in model training. In some embodiments, the model may be further extended with a generative head, allowing it to create multiple candidate next-step data entries and rank them based on their probability of fitting within the observed sequence. This process enhances the model's ability to generate structured predictions while maintaining the discriminative strength of contrastive learning. By shifting the focus from field-by-field distributional prediction accuracy to contextual consistency, contrastive learning provides a more robust and adaptable method for sequence modeling, particularly in environments where detecting structured multi-field deviations-rather than individual field value deviations -are key to using the model for meaningful outcomes.

While the contrastive learning objective is designed for representation learning, it can also be adapted for generative modeling. In some embodiments, a generative head may be incorporated into the model, allowing the system to generate multiple candidate future data entries. These candidate entries can then be ranked using the contrastive model, selecting the most likely next-step data entry from a set of generated possibilities. This approach allows the system to leverage both discriminative and generative learning strategies, enhancing its ability to process and predict sequential data.

Further, the sequence modeling network 105 may support supervised training alongside unsupervised sequence modeling objectives. One of the primary benefits for incorporating unsupervised learning is to enhance the performance of supervised learning tasks when trained jointly. FIG. 5 illustrates how supervised training is integrated within the architecture, where the supervised head 502 is responsible for predicting a target class label, while the unsupervised head 503 performs sequence-based learning objectives.

In some embodiments, supervised training can be combined with sequence modeling in multiple ways. One approach involves a pretraining-finetuning paradigm, where the model is first pretrained using an unsupervised learning objective, such as next-sample prediction, masked-sample prediction, or contrastive learning. After pretraining, a classifier head layer is fine-tuned on labeled data to perform the supervised learning task. This approach allows the model to leverage pre-learned representations before optimizing for classification.

In another embodiment, supervised learning is trained jointly with unsupervised objectives. In this approach, the sequence modeling network 105 learns to predict the next data entry autoregressively or a contrastive "was perturbed or not" label while simultaneously optimizing a supervised classification head. By training both objectives in parallel, the model learns structured representations from unlabeled sequences while improving predictive accuracy on labeled data. The architecture in FIG. 5 follows this joint training approach, where both supervised and unsupervised heads are updated using shared representations.

In some embodiments, supervised labels may be embedded directly into the sequence modeling task. For example, class labels can be represented as additional tokens within a tokenized sequence. During training, certain class label tokens may be masked, similar to other sequence elements, enabling the model to infer missing class information as part of its learning process. During evaluation, class labels are omitted, and the model relies on learned representations to make predictions.

The supervised learning framework can also be extended for multi-class classification tasks. In some embodiments, the sequence modeling network 105 is trained to distinguish between multiple categories, such as different event classifications in a dataset. In the pretraining-finetuning and joint training approaches, additional class labels may be included as distinct targets in a multi-class head layer. In the tokenized label approach, multiple class labels can be embedded as separate tokens within the sequence, enabling the model to learn classification decisions within the sequential context.

The system described herein follows the joint training approach, where the supervised head 502 is trained alongside the unsupervised head 503. This allows the model to extract meaningful representations from sequential data while optimizing classification performance. By combining supervised and unsupervised learning within a unified framework, the system benefits from both structured representation learning and direct predictive modeling.

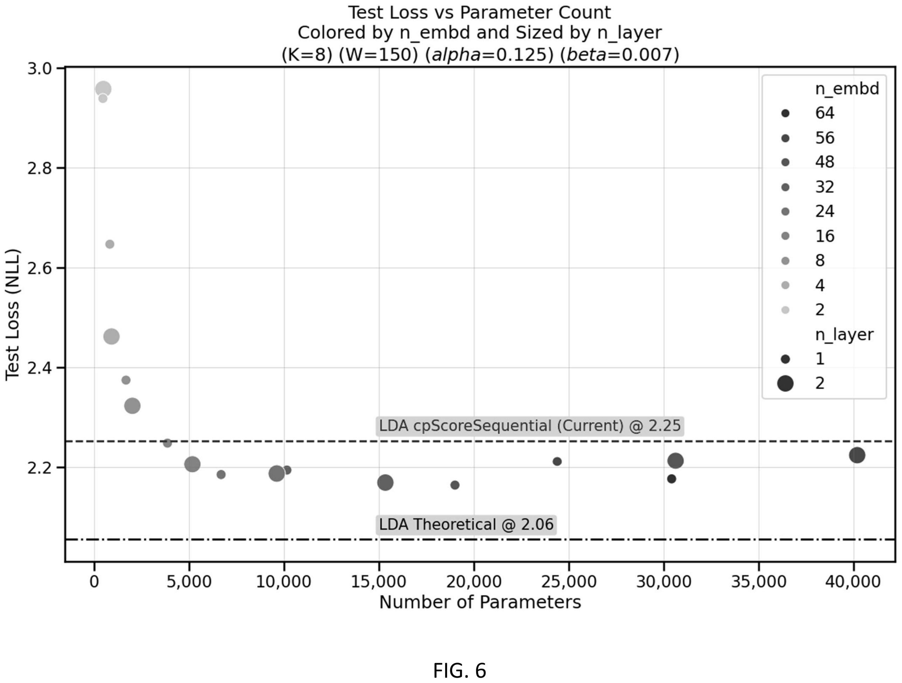

FIG. 6 is a diagram illustrating the comparison between the proposed sequence modeling network and a baseline Latent Dirichlet Allocation (LDA) model in an unsupervised next-step prediction task, in accordance with one or more embodiments of the subject matter described herein.

The experiment evaluates the performance of the tokenized sequence model in predicting the next data entry within a synthetically generated dataset. The dataset consists of 150 unique tokenized elements generated using an LDA-based process, which assumes a bag-of-words approach that does not incorporate sequential dependencies. In contrast, the sequence modeling network is designed to capture temporal and structural relationships through attention-based mechanisms.

The figure plots test loss as a function of model size, measured by the number of parameters. Different model configurations are tested, including variations in the number of transformer decoder layers (one or two layers) and different embedding dimensionalities ranging from 2 to 64. The results show that when the number of parameters is small (fewer than 5000), the sequence model outperforms the LDA baseline, as indicated by the red dashed line representing LDA's performance. As model complexity increases, the sequence model trends toward a theoretical lower bound (black dot-dashed line) that represents the optimal performance expected under the generative assumptions of LDA.

The superior performance of the sequence modeling network compared to the LDA model highlights the advantages of incorporating sequential information and attention mechanisms into unsupervised learning. The LDA model has been historically used in applications such as behavioral analysis and clustering, but its inability to capture sequence structure limits its effectiveness in certain domains. The experimental results demonstrate that the sequence modeling network can learn richer representations by leveraging attention-based feature extraction, making it more effective in capturing structured patterns present in sequential data.

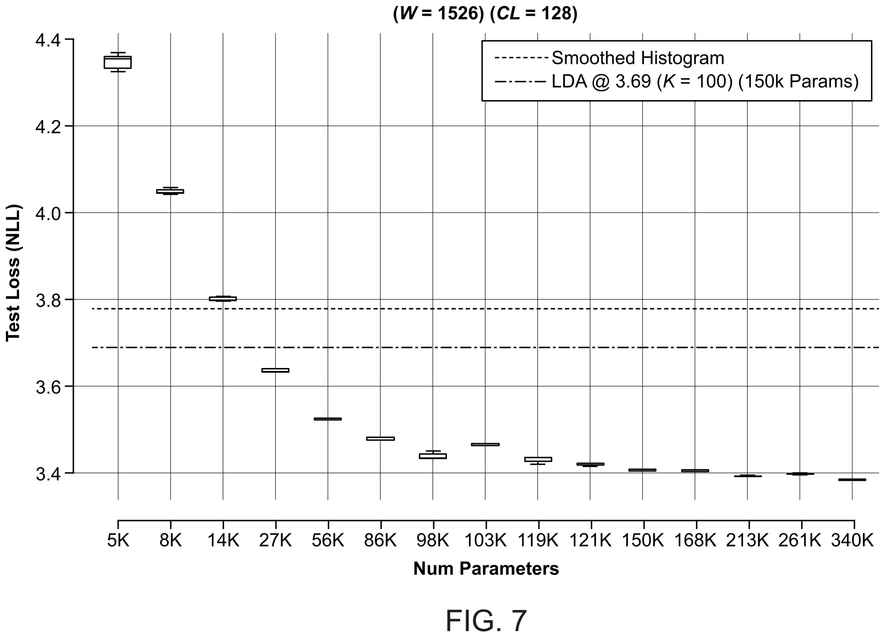

FIG. 7 is a diagram illustrating the performance comparison of sequence models of varying sizes in an unsupervised next-step prediction task, in accordance with one or more embodiments of the subject matter described herein. The x-axis represents model size in terms of the number of parameters, ranging from 5,000 to 340,000, while the y-axis represents test loss (negative log-likelihood, NLL).

The experiment evaluates the sequence modeling network against two baselines: a smooth histogram model and a Latent Dirichlet Allocation (LDA) model. The sequence models process input data entries using a tokenization approach, where each data entry is converted into a sequence of 1,526 tokens. The results indicate that sequence models with more than 27,000 parameters outperform the LDA model, despite the LDA model having a significantly larger parameter count of 150,000. This demonstrates that the sequence modeling network is approximately 5.5 times more parameter-efficient than LDA in capturing predictive structures within the dataset.

The figure also highlights computational efficiency advantages. The sequence modeling network leverages parallelized matrix multiplications, allowing it to fully utilize GPU acceleration. In contrast, traditional LDA models rely on iterative sampling-based inference, which restricts their computational efficiency. As a result, the sequence modeling network achieves a 10x reduction in training time compared to LDA on the same dataset. This efficiency enables broader hyperparameter exploration and optimization within a given computational budget.

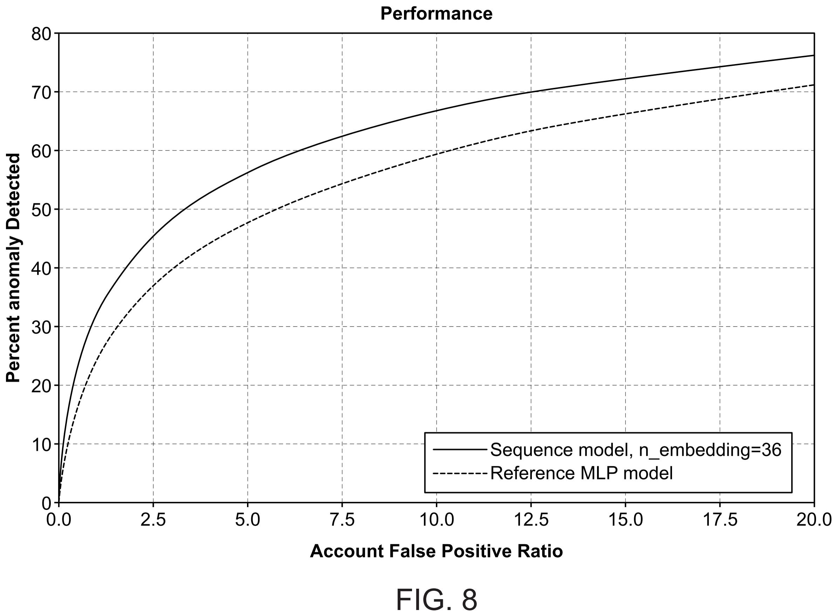

FIG. 8 is a diagram illustrating the supervised performance of the vectorized sequence model in a classification task, in accordance with one or more embodiments of the subject matter described herein. The figure presents receiver operating characteristic (ROC) curves comparing the sequence modeling network with a baseline multi-layer perceptron (MLP) model. The x-axis represents the account-level false positive ratio, while the y-axis represents the percentage of detected target events.

The sequence modeling network integrates both supervised and unsupervised learning objectives, as illustrated in FIG. 5. The results indicate that at a 1% false-positive rate, the sequence model detects approximately 50% of relevant target events, demonstrating its effectiveness in classification.

The reference MLP model follows a traditional classification paradigm, using hand-engineered features as inputs to a neural network. In contrast, the sequence modeling network learns structured representations from raw input data without requiring manually designed features. The improved detection performance at lower false-positive rates highlights the benefits of joint supervised and unsupervised training, allowing the model to generalize more effectively across diverse data distributions.

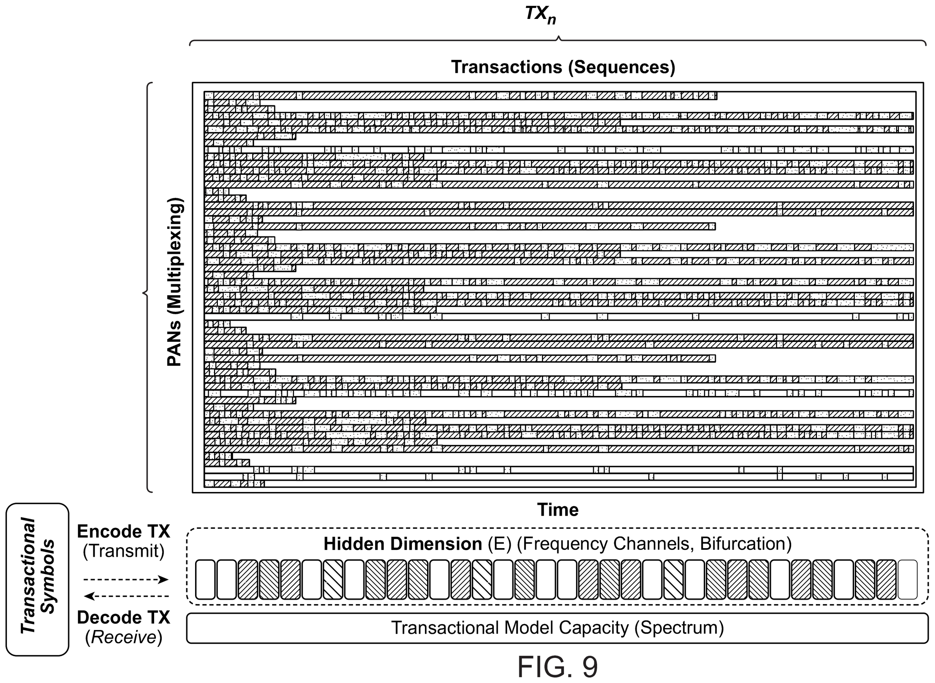

FIG. 9 is a diagram illustrating an exemplary architecture for parallelized sequence processing using attention-based mechanisms, in accordance with one or more embodiments of the subject matter described herein. The figure demonstrates how multiple sequences of data entries can be processed concurrently while maintaining computational efficiency and minimizing interference.

In some embodiments, the sequence modeling network applies multiplexed computation, where multiple variable-length sequences are processed in parallel using shared model weights but distinct data streams. This enables the model to efficiently attend to historical data entries across multiple sequences simultaneously, reducing latency and optimizing resource utilization.

The structure illustrated in FIG. 9 highlights how the system encodes and decodes sequential data through an optimized computational pathway. The horizontal axis represents time progression across sequences, while the vertical axis represents hidden dimensions used for processing, such as frequency channels or bifurcation pathways in the model. The model capacity spectrum illustrates how computational resources are allocated dynamically across different sequence components.

As shown in FIG. 9, Each vertical trace represents a sequence of data entries associated with a specific entity, such as an individual, device, or system. A data entry corresponds to a single recorded event within a sequence and is processed at a specific timestamp, as represented along the horizontal axis (time progression). The hidden dimension (vertical axis) represents the computational pathway allocated to different sequence components. This includes frequency channels, bifurcation pathways, and other learned structures within the model that are dynamically assigned based on the characteristics of each sequence. The transactional model capacity spectrum on the right illustrates how computational resources are distributed across various elements in the sequence modeling process. This multiplexed processing approach allows multiple sequences to be processed concurrently, reducing latency and improving throughput.

This approach significantly enhances throughput and reduces per-symbol computation costs, making it well-suited for high-frequency sequential data processing. By leveraging parallelized attention mechanisms, the system maintains low latency while handling large-scale sequential datasets, enabling real-time inference within a fixed computational budget. This is conceptually similar to multiplexing strategies in telecommunications, such as Time-Division Multiple Access (TDMA) and Code-Division Multiple Access (CDMA), where multiple signals are transmitted over shared resources without interference. In some embodiments, the parallelized processing framework enables the system to sustain high data entry throughput while preserving model accuracy. This is particularly advantageous for real-time applications where latency constraints are critical, such as industrial monitoring, financial modeling, and dynamic anomaly detection.

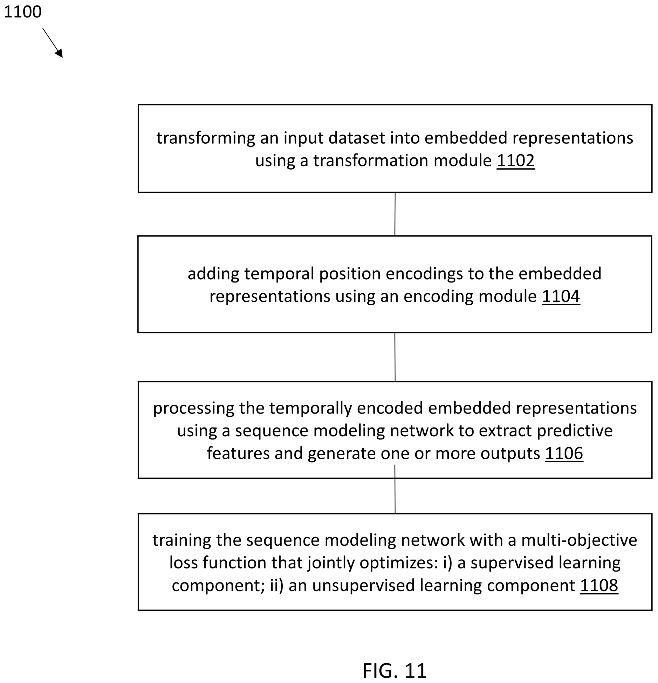

FIG. 11 is a diagram illustrating a flowchart of a process 1100 for generating an output using a neural network, in accordance with one or more embodiments of the subject matter described herein. As shown in FIG. 11, the process 1100 may begin with operation **1102,** wherein the system may transform a set of input dataset into embedded representations using a transformation module. In some embodiments, the transformation may involve tokenizing and/or vectorizing data points within each data entry. In some embodiments, the input dataset comprises a plurality of data entries, and each of the data entries comprises a plurality of data points. In operation **1104,** the system may apply temporal position encodings to the embedded representations using an encoding module. The temporal position encodings encode time-dependent information of the input dataset to preserve sequential relationships among data points. In operation **1106,** the system processes the temporally encoded embedded representations using a sequence modeling network to extract predictive features and generate one or more outputs. The sequence modeling network comprises an attention mechanism that assigns varying importance to one or more data entries during learning. In operation **1108,** the system trains the sequence modeling network with a multi-objective loss function that jointly optimizes: A supervised learning component and an unsupervised learning component, wherein the unsupervised learning component is configured to learn from an unlabeled dataset without relying on labeled training data.

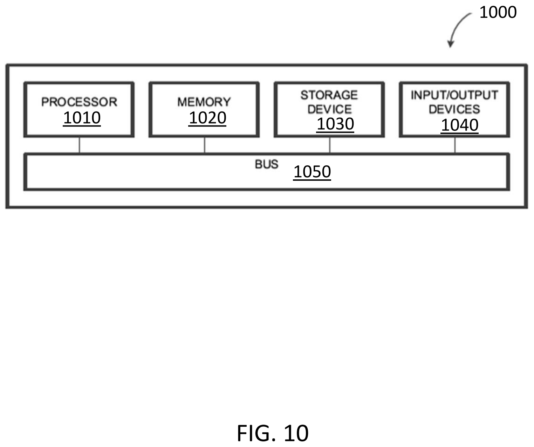

**FIG. 10** depicts a block diagram illustrating a computing system 10**00** consistent with implementations of the current subject matter. As shown in **FIG. 10****,** the computing system **1000** can include a processor **1010,** a memory **1020,** a storage device **1030,** and input/output devices **1040.** The processor **1010,** the memory **1020,** the storage device **1030,** and the input/output devices **1040** can be interconnected via a system bus **1050.** The computing system **1000** may additionally or alternatively include a graphic processing unit (GPU), such as for image processing, and/or an associated memory for the GPU. The GPU and/or the associated memory for the GPU may be interconnected via the system bus **1050** with the processor **1010,** the memory **1020,** the storage device **1030,** and the input/output devices **1040.** The memory associated with the GPU may store one or more images described herein, and the GPU may process one or more of the images described herein. The GPU may be coupled to and/or form a part of the processor **1010.** The processor **1010** is capable of processing instructions for execution within the computing system **1000.** In some implementations of the current subject matter, the processor **1010** can be a single-threaded processor. Alternately, the processor **1010** can be a multi-threaded processor. The processor **1010** is capable of processing instructions stored in the memory **1020** and/or on the storage device **1030** to display graphical information for a user interface provided via the input/output device **1040.**

The memory **1020** is a computer-readable medium, such as volatile or nonvolatile memory, that stores information within the computing system **1000.** The memory **1020** can store data structures representing configuration object databases, for example. The storage device **1030** is capable of providing persistent storage for the computing system **1000.** The storage device **1030** can be a floppy disk device, a hard disk device, an optical disk device, or a tape device, or other suitable persistent storage means. The input/output device **1040** provides input/output operations for the computing system **1000.** In some implementations of the current subject matter, the input/output device **1040** includes a keyboard and/or pointing device. In various implementations, the input/output device **1040** includes a display unit for displaying graphical user interfaces.

According to some implementations of the current subject matter, the input/output device **1040** can provide input/output operations for a network device. For example, the input/output device **1040** can include Ethernet ports or other networking ports to communicate with one or more wired and/or wireless networks (e.g., a local area network (LAN), a wide area network (WAN), the Internet).

In some implementations of the current subject matter, the computing system **1000** can be used to execute various interactive computer software applications that can be used for organization, analysis and/or storage of data in various (e.g., tabular) format (e.g., Microsoft Excel^{®}, and/or any other type of software). Alternatively, the computing system **1000** can be used to execute any type of software applications. These applications can be used to perform various functionalities, e.g., planning functionalities (e.g., generating, managing, editing of spreadsheet documents, word processing documents, and/or any other objects, etc.), computing functionalities, communications functionalities, etc. The applications can include various add-in functionalities or can be standalone computing products and/or functionalities. Upon activation within the applications, the functionalities can be used to generate the user interface provided via the input/output device **1040.** The user interface can be generated and presented to a user by the computing system **1000** (e.g., on a computer screen monitor, etc.).

One or more aspects or features of the subject matter described herein can be realized in digital electronic circuitry, integrated circuitry, specially designed framework specific integrated circuits (ASICs), field programmable gate arrays (FPGAs) computer hardware, firmware, software, and/or combinations thereof. These various aspects or features can include implementation in one or more computer programs that are executable and/or interpretable on a programmable system including at least one programmable processor, which can be special or general purpose, coupled to receive data and instructions from, and to transmit data and instructions to, a storage system, at least one input device, and at least one output device. The programmable system or computing system may include clients and servers. A client and server are generally remote from each other and typically interact through a communication network. The relationship of client and server arises by virtue of computer programs running on the respective computers and having a client-server relationship to each other.

These computer programs, which can also be referred to as programs, software, software frameworks, frameworks, components, or code, include machine instructions for a programmable processor, and can be implemented in a high-level procedural language, an object-oriented programming language, a functional programming language, a logical programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions non-transitorily, such as for example as would a non-transient solid-state memory or a magnetic hard drive or any equivalent storage medium. The machine-readable medium can alternatively or additionally store such machine instructions in a transient manner, such as for example as would a processor cache or other random access memory associated with one or more physical processor cores.

To provide for interaction with a user, one or more aspects or features of the subject matter described herein can be implemented on a computer having a display device, such as for example a cathode ray tube (CRT) or a liquid crystal display (LCD) or a light emitting diode (LED) monitor for displaying information to the user and a keyboard and a pointing device, such as for example a mouse or a trackball, by which the user may provide input to the computer. Other kinds of devices can be used to provide for interaction with a user as well. For example, feedback provided to the user can be any form of sensory feedback, such as for example visual feedback, auditory feedback, or tactile feedback; and input from the user may be received in any form, including, but not limited to, acoustic, speech, or tactile input. Other possible input devices include, but are not limited to, touch screens or other touch-sensitive devices such as single or multi-point resistive or capacitive trackpads, voice recognition hardware and software, optical scanners, optical pointers, digital image capture devices and associated interpretation software, and the like.

### USE CASE 1 - Patient Health Monitoring and Early Disease Detection

In the medical field, continuous patient monitoring is essential for early detection of disease progression and timely intervention. Electronic health records (EHRs) and real-time physiological sensor data generate vast amounts of time-ordered information, but only a small fraction of this data is explicitly labeled with known disease outcomes. The attention-based neural network system described herein provides an effective solution for extracting meaningful patterns from sequential medical data while integrating both labeled and unlabeled information.

The system processes an input dataset of heterogeneous medical records, including structured numerical values (e.g., lab test results, vital signs), categorical attributes (e.g., diagnosis codes, medication types), and unstructured text (e.g., physician notes). The transformation module converts these records into embedded representations, allowing the model to represent each patient's medical history in a structured and scalable manner. To capture temporal dependencies between different medical events, the temporal encoding module incorporates time-based positional encodings, ensuring that irregularly spaced observations-such as intermittent check-ups, emergency visits, and daily sensor readings-are accurately modeled.

The sequence modeling network then processes the temporally encoded medical records to identify predictive features indicative of disease progression. The system employs a multi-headed attention mechanism that assigns different levels of importance to past patient events. For example, a recent sharp rise in blood pressure may be more relevant for detecting an impending cardiovascular event than historical fluctuations within a normal range.

The supervised learning component (e.g., supervised head) in this framework functions as a classification model to predict critical health outcomes such as the likelihood of sepsis, heart failure, or post-operative complications. This component is trained using a limited set of labeled patient records where disease outcomes are known. In contrast, the unsupervised head leverages unlabeled patient histories to learn broader health trends through contrastive learning. By distinguishing between real and synthetically generated medical trajectories, the system learns to differentiate normal physiological variations from patterns indicative of underlying health risks. This dual-head architecture including the supervised learning component and the unsupervised learning component enables the system to improve disease prediction accuracy even when labeled medical data is scarce. By pretraining on vast amounts of unlabeled patient records and subsequently fine-tuning with labeled cases, the system reduces dependency on manually annotated datasets while enhancing generalization across diverse patient populations.

For real-time clinical applications, the system can be deployed in hospital monitoring systems, wearable health devices, or telemedicine platforms. Physicians can receive alerts when the model detects an increased likelihood of a serious health event, prompting further investigation or preventive measures. Additionally, the model's ability to incorporate time-based encodings ensures that predictions remain robust even when medical records contain irregularly spaced observations, making it well-suited for dynamic healthcare environments. By integrating both supervised and unsupervised learning components, the proposed system enhances early disease detection, supports clinical decision-making, and optimizes predictive healthcare analytics across diverse medical datasets.

### USE CASE 2 - Industrial Sensor Network Monitoring and Fault Detection

In large-scale industrial environments, factories deploy thousands of interconnected IoT sensors to monitor equipment performance, environmental conditions, and production metrics. These sensors generate vast amounts of sequential data, capturing critical operational variables such as temperature, vibration, pressure, humidity, and energy consumption. However, anomalies in sensor readings may not be immediately obvious, as individual sensors operate in a complex interdependent network. Detecting early warning signs of equipment failure or process inefficiencies requires a modeling approach that can extract meaningful patterns while preserving temporal and relational dependencies across different sensors.

The attention-based neural network system described herein enables efficient real-time monitoring and predictive maintenance in industrial IoT settings. The system processes multi-source sensor data streams, transforming diverse numerical and categorical sensor readings into a structured representation using a transformation module. Each data entry corresponds to a set of sensor measurements collected at a given timestamp, and each data point represents an individual sensor reading.

To account for time-dependent relationships in sensor behavior, the system applies temporal encoding, capturing delays, seasonal variations, and abnormal fluctuations in sensor data. The sequence modeling network then processes the temporally encoded representations to extract predictive features, allowing the system to identify patterns that indicate potential equipment malfunctions or suboptimal operating conditions.

One of the key advantages of this approach is the ability to assign different levels of importance to various sensor readings using an attention mechanism. For example, a sudden increase in temperature in one machine may be critical only if accompanied by rising vibration levels in a neighboring component. The model dynamically weighs past sensor readings to determine which measurements are most relevant when predicting system health.

The supervised learning component (e.g., supervised head) functions as a classifier, trained on labeled failure cases where known machine breakdowns or production anomalies have occurred. This enables the model to detect early indicators of system failures, such as bearing wear in motors, coolant leaks, or unexpected downtime events. Meanwhile, the unsupervised head learns from historical sensor patterns in unlabeled data, enabling the detection of novel or unknown failure modes. By training on both normal and anomalous operating conditions, the model can distinguish between routine fluctuations and meaningful deviations that warrant maintenance intervention.

Additionally, the system supports contrastive learning, allowing it to compare real-time sensor readings against expected patterns derived from historical data and synthetically generated observations. For instance, if a particular machine typically exhibits a gradual pressure buildup before failure, the system can flag similar patterns early, even if no previous identical failure cases exist in the training data. By continuously monitoring sensor relationships across the factory floor, the system enables proactive maintenance, reducing unplanned downtime and extending equipment lifespan. Furthermore, the model's ability to scale across thousands of sensors in real-time makes it well-suited for large industrial environments, such as automotive manufacturing plants, semiconductor fabrication facilities, and energy production sites.

With its ability to integrate labeled and unlabeled data, dynamically assign importance to relevant signals, and adapt to changing industrial conditions, the attention-based neural network system provides a powerful solution for optimizing IoT-driven factory operations and preventing costly failures before they occur.

### USE CASE 3 - Supply Chain Optimization

In modern supply chain and logistics networks, real-time monitoring and predictive analytics are critical for ensuring efficiency, reducing disruptions, and optimizing operational workflows. The ability to track shipments, predict delays, and detect anomalies in supply chain performance requires advanced sequence modeling techniques capable of handling vast amounts of heterogeneous, time-dependent data. Traditional rule-based systems and static threshold-based anomaly detection methods struggle to adapt to evolving patterns in supply chain operations, leading to inefficiencies and missed critical events. To address these challenges, the described system leverages a dual-headed neural network architecture that integrates supervised and unsupervised learning components to extract predictive insights and detect anomalies in logistical workflows.

The system processes data streams from various sensors, tracking systems, and enterprise resource planning (ERP) platforms, capturing sequential data entries that describe the movement of goods, warehouse inventory levels, transportation conditions, and supply chain disruptions. Each data entry consists of multiple data points, including numerical attributes such as temperature, humidity, and transit time, as well as categorical identifiers such as shipment status, warehouse location, and carrier information. The transformation module converts these raw data points into structured representations, utilizing tokenization for categorical variables and direct numerical embedding for numerical fields, allowing for efficient downstream processing. The temporal encoding module further enriches these representations by incorporating delta time features and periodic encodings, ensuring that the system can model both short-term variations and long-range dependencies in supply chain operations.

Once the input data is processed, the sequence modeling network applies an attention mechanism that dynamically assigns importance to historical data entries based on learned relationships. The unsupervised learning component of the system is trained to recognize recurring patterns in supply chain sequences, identifying expected fluctuations in demand, typical transit times, and seasonal variations in logistics operations. By continuously learning from vast amounts of unlabeled data, the system builds a comprehensive model of normal supply chain behavior, allowing it to anticipate delays, optimize inventory distribution, and enhance route planning. This predictive capability enables supply chain managers to proactively adjust operations based on inferred trends, mitigating bottlenecks and improving overall efficiency.

The supervised learning component is designed for anomalous event detection, identifying deviations from expected operational patterns that may indicate supply chain disruptions, fraud, or equipment failures. Unlike traditional anomaly detection models that rely on predefined rules, the supervised head leverages labeled historical data to classify unusual patterns such as shipment delays beyond expected transit times, temperature fluctuations exceeding safe thresholds, or deviations in order fulfillment rates. By incorporating labeled anomalies into the training process, the supervised head refines its ability to detect emerging risks, reducing false positives while improving sensitivity to critical disruptions. When an anomaly is detected, the system generates alerts that can be used to trigger automated responses or escalate issues for human intervention.

The combination of these two learning components allows the system to leverage both structured and unstructured data in a highly adaptive manner. The unsupervised head provides a dynamic model of expected supply chain behavior, ensuring that predictions align with real-world patterns rather than rigid, predefined rules. Meanwhile, the supervised head continuously refines its understanding of disruptions, improving anomaly event detection capabilities over time. By integrating these two components within a shared sequence modeling framework, the system enables efficient, real-time decision-making, enhancing supply chain resilience and operational efficiency across industries.

In the descriptions above and in the claims, phrases such as "at least one of" or "one or more of" may occur followed by a conjunctive list of elements or features. The term "and/or" may also occur in a list of two or more elements or features. Unless otherwise implicitly or explicitly contradicted by the context in which it used, such a phrase is intended to mean any of the listed elements or features individually or any of the recited elements or features in combination with any of the other recited elements or features. For example, the phrases "at least one of A and B;" "one or more of A and B;" and "A and/or B" are each intended to mean "A alone, B alone, or A and B together." A similar interpretation is also intended for lists including three or more items. For example, the phrases "at least one of A, B, and C;" "one or more of A, B, and C;" and "A, B, and/or C" are each intended to mean "A alone, B alone, C alone, A and B together, A and C together, B and C together, or A and B and C together." Use of the term "based on," above and in the claims is intended to mean, "based at least in part on," such that an unrecited feature or element is also permissible.

The subject matter described herein can be embodied in systems, apparatus, methods, and/or articles depending on the desired configuration. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and subcombinations of the disclosed features and/or combinations and subcombinations of several further features disclosed above. In addition, the logic flows depicted in the accompanying figures and/or described herein do not necessarily require the particular order shown, or sequential order, to achieve desirable results. Other implementations may be within the scope of the following claims.

## Claims

1. A system comprising one or more computers and one or more storage devices storing instructions that when executed by the one or more computers cause the one or more computers to implement a neural network for generating an output, the neural network comprising:
a transformation module configured to transform an input dataset into embedded representations, wherein the input dataset comprises a plurality of data entries, and each of the data entries comprises a plurality of data points;
an encoding module configured to add temporal position encodings into the embedded representations, wherein the temporal position encodings encode time-dependent information of the input dataset to preserve sequential relationships among data points; and
a sequence modeling network configured to process the temporally encoded embedded representations to extract predictive features and to generate one or more outputs, wherein the sequence modeling network comprises an attention mechanism that assigns varying importance to one or more data entries during learning, and wherein the sequence modeling network is trained with a multi-objective loss function that jointly optimizes a supervised learning component and an unsupervised learning component, wherein the unsupervised learning component is configured to learn from an unlabeled dataset without relying on labeled training data.

2. The system of claim 1, wherein the unsupervised learning component is trained using a contrastive loss function, wherein the contrastive loss function optimizes the sequence modeling network by maximizing a separation between representations of data entries belonging to the same profiling entity and data entries containing substituted, synthetically generated, or inserted data points from different profiling entities.

3. The system of claim 1 or 2, wherein the supervised learning component is trained to optimize a classification objective, wherein the supervised learning component is configured to generate a predictive output using the extracted predictive features, and wherein the classification objective is optimized using a loss function that minimizes a deviation between a predicted output and ground-truth labels associated with the data entries.

4. The system of any one of the preceding claims, wherein the sequence modeling network extracts the predictive features by an attention mechanism that dynamically weighs data entries based on learned importance represented by an attention score associated with each of the data entries.

5. The system of any one of the preceding claims, wherein the plurality of data entries include heterogeneous medical records, wherein the plurality of data points include one or more of the following: numerical values, categorical attributes and unstructured text of the heterogeneous medical records;
when the predictive features extracted by the sequence modeling network include predictive features indicative of disease progression, the one or more outputs include a predictive output generated using the predictive features indicative of disease progression.

6. The system of claim 5, wherein the heterogeneous medical records include a plurality of labeled patient records in which disease outcomes are known;
wherein the supervised learning component is configured to learn from the plurality of labeled patient records;
wherein unsupervised learning component is configured to learn from unlabeled patient histories.

7. The system of claim 5 or 6, wherein different levels of importance are assigned to past patient events, wherein recent events are prioritized over less recent events and/or clinically significant changes are prioritized over changes within a normal range.

8. A computer-implemented method for generating an output using a neural network, the method comprising:
transforming an input dataset into embedded representations using a transformation module, wherein the input dataset comprises a plurality of data entries, and each of the data entries comprises a plurality of data points;
adding temporal position encodings to the embedded representations using an encoding module, wherein the temporal position encodings encode time-dependent information of the input dataset to preserve sequential relationships among data points;
processing the temporally encoded embedded representations using a sequence modeling network to extract predictive features and generate one or more outputs, wherein the sequence modeling network comprises an attention mechanism that assigns varying importance to one or more data entries during learning; and
training the sequence modeling network with a multi-objective loss function that jointly optimizes: i) a supervised learning component; ii) an unsupervised learning component, wherein the unsupervised learning component is configured to learn from an unlabeled dataset without relying on labeled training data.

9. The method of claim 8, wherein each of the data entries comprises a set of measurements collected at a timestamp and each of the data points comprises a sensor reading.

10. The method of claim 9, further comprising assigning a level of importance to a first sensor reading indicating a change, wherein the level of importance depends on whether a second sensor reading also indicates a change.

11. The method of claim 9 or 10, wherein the supervised learning component is trained on labeled failure cases corresponding to machine breakdowns or production anomalies,
wherein the unsupervised learning component is trained from historical patterns in unlabeled sensor data.

12. The method of any one of claims 8 to 11, wherein the sequence modeling network extracts the predictive features by an attention mechanism that dynamically weighs data entries based on learned importance represented by an attention score associated with each of the data entries;
wherein the embedded representation may be a structured representation of the input dataset, generated as either a tokenized representation or a vectorized representation.

13. The method of any one of claims 8 to 12, wherein the temporal position encodings comprise at least one of delta time representations, periodic encodings, or learned time embeddings, wherein the delta time representations capture time intervals between data entries, the periodic encodings represent cyclic temporal patterns, and the learned time embeddings adaptively encode temporal dependencies.

14. The method of claim 13, wherein the temporal position encodings are incorporated into the embedded representations such that the sequence modeling network processes the temporally encoded embedded representations to extract predictive features while maintaining sequential dependencies among the data entries.

15. A computer program product comprising a transient or non-transient machine-readable medium storing instructions that, when executed by at least one programmable processor, cause the at least one programmable processor to implement a method according to any one of claims 8 to 14.
